# EUROPEAN PATENT APPLICATION

(11) **EP 4 195 372 A1**
(43) Date of publication of application: **14.06.2023**
(21) Application number: 21213162.7
(22) Date of filing: 08.12.2021
(51) Int. Cl.: H01M 50/109, H01M 50/153, H01M 50/159, H01M 50/169, H01M 50/184, H01M 50/191

(54) **A BUTTON BATTERY WITH IMPROVED SEALING PROPERTIES**

(71) Applicant: Renata AG, 4452 Itingen (CH)
(72) Inventor: WU, Han, Pembroke Pines, 33029 (US); MAIRE, Pascal, 4410 Liestal (CH); WANG, Xiaojun, 4455 Zunzgen (CH); SCHICK, Artur, 79395 Neuenburg am Rhein (DE); GERBER, Marco, 4106 Therwil (CH); STEIGER, Beat, 4492 Tecknau (CH); EL BARADAI, Oussama, 4057 Basel (CH)
(74) Representative: ICB SA

(57) **Abstract**

According to the invention, a button battery (1',1") is provided that includes a sealing assembly, comprising one of the terminals (9) of the battery, an electrically insulating portion (17) and a circumferential wall portion (15). The insulating portion (17) forms a hermetic bond with the terminal (9) and with the wall portion (15), obtainable by methods applied in glass-to-metal type technology. The sealing assembly is receptacle-shaped and one or more components of the battery such as the anode (8), the separator sheet (7) and the cathode (3) may be inserted in said receptacle shape prior to assembling the battery. The wall portion (15) forms a part of the second terminal and is attached to the remainder of said second terminal by an electrically conductive and hermetically closed connection such as a circumferential weld seam (16). A battery according to the invention may be produced by inserting one or more components of the battery into the sealing assembly (9,17,15) and attaching the wall portion (15) of the sealing assembly to the remainder (2,2') of the second terminal, for example by welding.

## Description

### Field of the invention

The present invention is related to button-shaped batteries, in particular to the sealing of these batteries.

### State of the art

Button-shaped batteries, also referred to shortly as 'button batteries', 'button cells' or 'coin cells' are widely used for powering small electrical appliances and devices. Various types of button batteries are in use, distinguished by various dimensions and by the materials used for the electrodes and the electrolyte. A commonly used type for low voltage appliances such as wristwatches or the like is often referred to as a 'CR' type battery, the C referring to the chemistry of the electrodes and the R to the round shape of the battery. CR batteries comprise a lithium-based anode and a cathode comprising manganese dioxide as active material. The electrolyte may be a solid or liquid organic material. Other types are coded as LR, SR or PR batteries, respectively known as alkaline batteries, silver oxide batteries and zinc air batteries. The latter three battery types comprise a water-based electrolyte.

All button batteries comprise round metal terminals, one of which is usually referred to as the cup, the other as the lid, between which the electrodes and the electrolyte are contained.

A common problem encountered in button batteries comprising a liquid electrolyte is the leakage of the electrolyte. Electrolyte leakage happens when the battery is not sealed well, so that its electrolyte is allowed to escape from the inside to the atmosphere.

For silver oxide batteries, zinc air batteries and alkaline batteries, the electrolyte is typically a strong alkaline solution, containing NaOH and KOH, among other chemicals. For lithium batteries, the electrolyte is typically one or more organic solvents with lithium salts dissolved in it. Both of these electrolytes will cause harm to the environment and to humans. The strong alkaline solution is strongly corrosive and even a small amount will cause metals to corrode. If it gets into the eyes, the mouth, the skin, and even inhaled, it may cause severe damage to human organs.

Currently, button batteries are closed by crimping the cup onto a plastic gasket, which separates the cup and the lid. However, especially for small button batteries, the strength of the crimp is often insufficient, increasing the risk of electrolyte leakage.

### Summary of the invention

The invention aims to provide a solution to the above-described problems. This aim is achieved by a button battery and by a method for producing said battery in accordance with the appended claims.

According to the invention, a button battery is provided that includes a sealing assembly, comprising one of the terminals of the battery, an electrically insulating portion and a circumferential wall portion. The insulating portion forms a hermetically sealed bond with the terminal and with the wall portion, i.e. a gas-tight and liquid tight bond, obtainable by methods applied in glass-to-metal type technology. The insulating portion may thus for example be a glass portion. The sealing assembly is receptacle-shaped and one or more components of the battery such as the anode, the separator sheet and the cathode may be inserted in said receptacle shape prior to assembling the battery. The circumferential wall portion of the sealing assembly forms a part of the second terminal and is attached to the remainder of said second terminal by an electrically conductive and hermetically closed connection such as a circumferential weld seam. The terminals may be formed of stainless steel or any other suitable metal.

A battery according to the invention may be produced by inserting one or more components of the battery into the receptacle shaped sealing assembly and attaching the wall portion of said assembly to the remainder of the second terminal, for example by welding.

The invention enables the use of the glass-to-metal type technology in a production process for button batteries of different shapes and sizes, including small-sized batteries for which the current gasket seal represents a risk of electrolyte leakage. This risk is reduced or essentially eliminated by the higher quality of the metal-to-glass type seals included in a battery according to the invention.

### Brief description of the figures

- Figures 1a and 1b show front and plane section views of a button battery as presently known in the art.
- Figures 2a and 2b show front and plane section views of a button battery according to an embodiment of the invention.
- Figures 3a to 3d illustrate a number of steps of a method for producing a battery according to the embodiment shown in Figures 2a and 2b.
- Figures 4a to 4d illustrate steps of a method for producing a battery according to another embodiment of the invention.

### Detailed description of embodiments of the invention

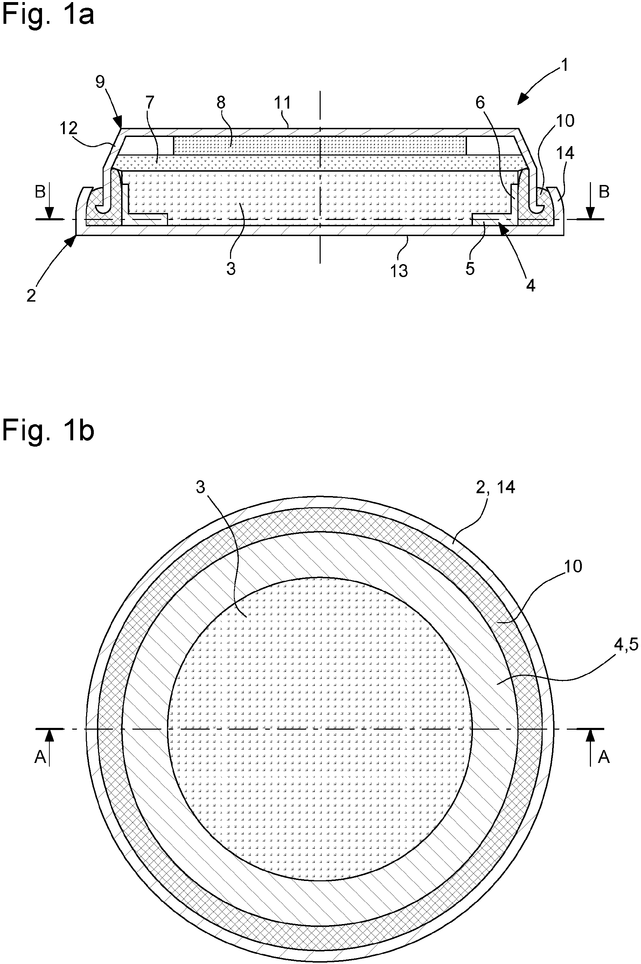

A prior art button battery will first be described in order to define its various components, before describing the characterizing elements of a battery in accordance with the invention. Figures 1a and 1b show a button battery 1 as presently known in the art. The battery comprises a metal cup 2, usually formed of stainless steel, that forms the positive terminal of the battery. The cathode 3 is placed inside the cup 2. The cathode illustrated in Figure 1a is shaped as a tablet obtainable by pressing a cathode powder into a metal holder 4, which has the shape of a ring with a bottom strip 5 and a sidewall 6. Alternatively, the cathode powder may be pressed into a metal mesh. The holder 4 or the mesh are intended to increase the mechanical stability of the compacted cathode powder.

As seen in Figure 1a, the compacted cathode material 3 is level with the bottom surface of the ring-shaped strip 5, and these elements are both in physical contact with the bottom of the cup 2. Above the tablet 3 is a separator sheet 7, that separates the cathode tablet 3 from the battery's anode 8 located on top of the separator sheet 7. The anode 8 is covered by a metal lid 9 that forms the negative terminal of the battery 1, usually also formed of stainless steel. The negative terminal 9 comprises a round planar contact surface 11 and an upstanding wall portion 12 oriented away from the contact surface 11. Likewise, the positive terminal 2 comprises a round planar contact surface 13 and a wall portion 14 oriented away from said contact surface 13. The contact surfaces 11 and 13 are configured to electrically connect to respective contacts of a device powered by the battery.

The separator 7 may be a sheet of solid electrolyte laminated onto the cathode 3, in which case the cathode 3 also comprises the solid electrolyte mixed together with the active material. Alternatively, the battery 1 may include a liquid electrolyte. In this case, the cathode 3 is soaked in this liquid electrolyte and the separator 7 may be a porous polymeric film that is itself electrically insulating, but that can absorb the liquid electrolyte in order to conduct ions from the anode 8 to the cathode 3.

An electrically insulating gasket 10 is inserted between the outer rims of the cup 2 and the lid 9, separating the positive and negative terminals and closing off the interior of the battery 1 from the external atmosphere. As stated in the introduction, the sidewall 14 of the cup 2 is crimped onto the gasket 10, but this way of sealing the battery leads to a risk of leakage of the electrolyte when a liquid electrolyte is used, especially for the smaller sized batteries.

The present invention solves this problem by providing a way to apply a glass-to-metal type sealing in a button battery. As the invention is not limited to the use of glass as the sealing material, this type of sealing will hereafter be referred to as 'insulator-to-metal' sealing. It is to be understood however that this term refers to the known technology wherein an electrically insulating material, for example glass, is chemically bonded to a metal, so as to form a hermetic seal between the insulator in the solid state and the metal, and wherein the expansion coefficients of the metal and insulator are matched so that the seal is maintained within a given temperature range. This technology is known from applications in the fields of construction, automotive, optics and many others.

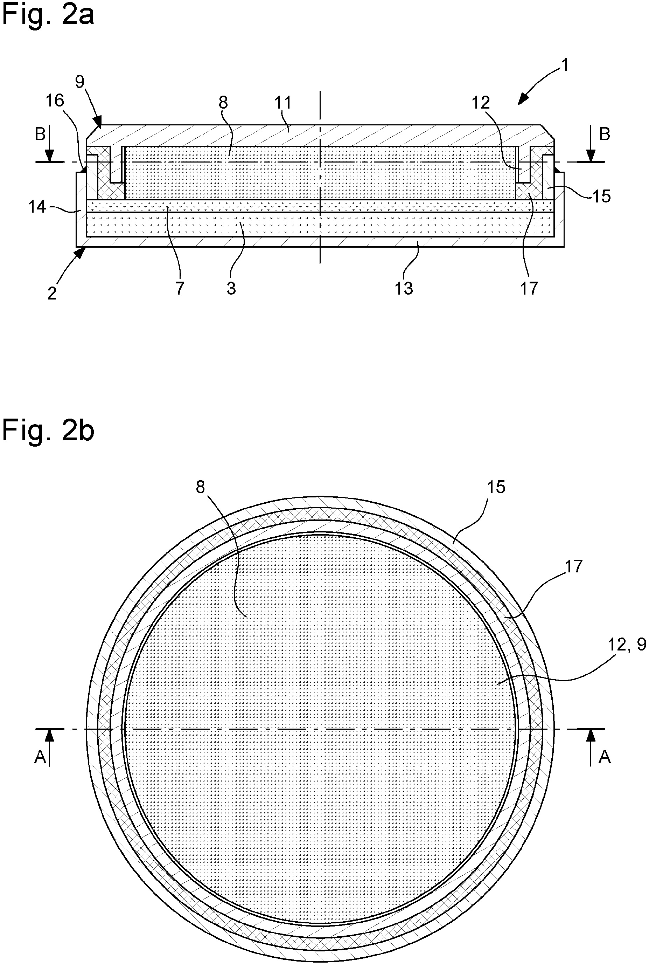

Figures 2a and 2b illustrate an example of a button battery in accordance with the invention. A number of the components described above can be recognized, and are indicated by the same reference numerals : the cup 2 with its contact surface 13 and sidewall 14, the cathode 3, the separator sheet 7, the anode 8, the negative terminal 9 with its contact surface 11 and sidewall 12. The cathode 3 in this case may be a compressed tablet that is not pressed into a ring-shaped holder but that is pressed into a mesh (not visible in the drawing but known as such). For silver oxide batteries, for example, the cathode tablet may be pressed directly into the cup 2.

It is seen furthermore that the cup 2 is welded to a metal ring 15 that is partly inserted into the cup 2 and welded to the cup 2 by a weld seam 16.

An electrically insulating portion 17 is present between the upstanding wall 12 of the negative terminal 9 and the metal ring 15. The bond between the insulating portion 17 and the terminal 9 on the one hand and the metal ring 15 on the other hand is of the insulator-to-metal type as defined above, i.e. the ring 15, the insulating portion 17, for example a glass portion, and the negative terminal 9 form an assembly of tightly bonded materials wherein the insulating portion 17 is tightly bonded to the negative terminal 9 and to the metal ring 15 and wherein the expansion coefficients of the insulating portion 17 and the metal parts are matched within a given temperature range. This assembly of tightly bonded materials is referred as a 'sealing assembly' in the appended claims.

In the assembled battery shown in Figure 2, the positive terminal is now formed by the cup 2 and the metal ring 15. The metal ring 15 together with the weld seam 16 and the upstanding wall of the cup 2 now define the upstanding wall of the positive terminal. The insulator 17 forms an electrical isolation between the two terminals 9 and 2+15 while also sealing the interior of the battery from the atmosphere. The hermetic seal obtained by the insulator-to-metal bonds is of much higher quality than can be obtained by the gasket seal shown in Figures 1a and 1b. By this hermetic seal and by the weld seam 16 that forms an equally hermetic but electrically conductive connection, the battery is thereby closed off from the atmosphere in a reliable way, ensuring that no electrolyte can escape.

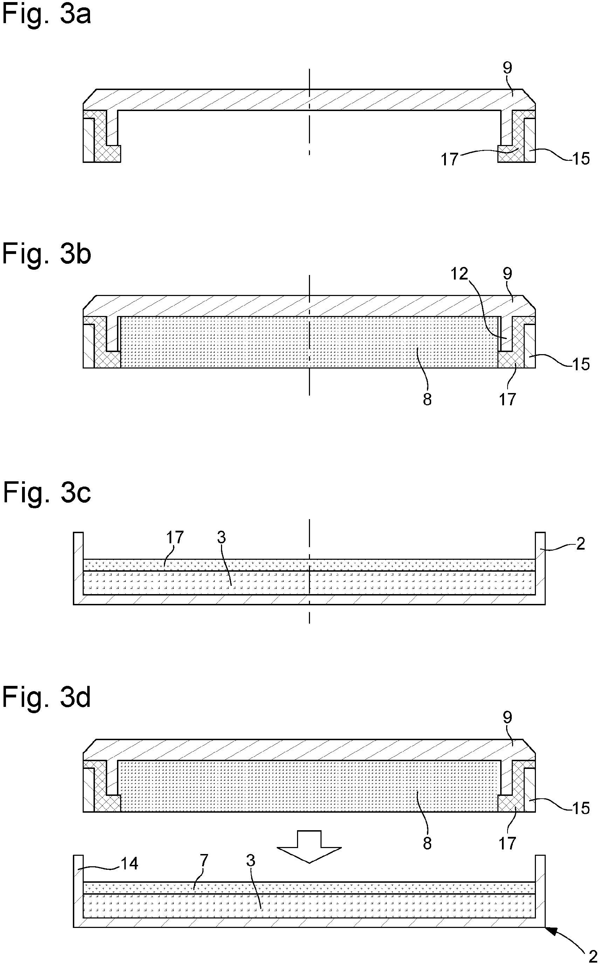

A number of key method steps required for producing the battery of Figure 2 are illustrated in Figures 3a to 3d. The sealing assembly formed of the negative terminal 9, the insulator 17 and the metal ring 15 is shown in Figure 3a. This assembly can be produced by using techniques known from insulator-to-metal type bonding technology.

Depending on the materials that are being used, it may be required to perform a pretreatment on the metal surfaces that are to be bonded to the insulator, such as a cleaning step, an oxidization step or the application of a reactive layer on the metal surface that is to be bonded to the insulator.

As shown in Figure 3b, the anode 8 is then inserted into the sealing assembly. The anode 8 may be a solid piece of anode material, for example lithium in the case of a CR battery, or it may be a slurry of the negative active material particles, as in a silver oxide battery where a zinc slurry is used for the anode. In the latter case, the anode material fills up the inner volume of the sealing assembly (i.e. there is no gap between the sidewall 12 of the negative terminal and the anode 8).

As illustrated in Figure 3c, the cathode tablet 3 and the separator sheet 7 are placed inside the cup 2. When a liquid electrolyte is used, this liquid electrolyte is then added to the cup 2, so that the liquid is absorbed by the cathode 3 and by the separator sheet 7. As shown in Figure 3d, the sealing assembly including the anode 8 is then inserted inside the upstanding wall 14 of the cup 2, until the anode 8 contacts the separator sheet 7. The height of the upstanding wall 14 and of the metal ring 15 are configured so that this wall 14 and the metal ring 15 are overlapping each other at this point. The weld seam 16 is then applied by a suitable welding process, thereby obtaining the fully sealed battery shown in Figures 2a and 2b.

The invention is not limited to a battery having the geometry illustrated in Figures 2 and 3. The main characteristic of the invention is that a sealing assembly is produced prior to the assembly of the battery as such. Both terminals of the assembled battery have a receptacle shape, comprising a planar round contact surface and an upstanding sidewall oriented away from the contact surface. The sealing assembly comprises one of the terminals of the battery, an insulating portion and a circumferential wall portion that will be part of the other terminal in the assembled battery. The terminal parts of the sealing assembly are electrically isolated from each other by the insulator material that is tightly bonded to said parts, forming a hermetic seal between the insulator material and the respective parts. The wall portion of the sealing assembly is attached to the remainder of said other electrode by an electrically conductive and closed connection, such as a circumferential weld seam.

In the embodiment of Figures 2 and 3, the sealing assembly comprises the negative terminal 9, the insulating portion 17 and the metal ring 15. Said metal ring represents the abovenamed circumferential wall portion, that is in this case part of the positive terminal. The positive terminal is formed by the cup 2 and said metal ring 15 welded to each other by the circumferential weld seam 16.

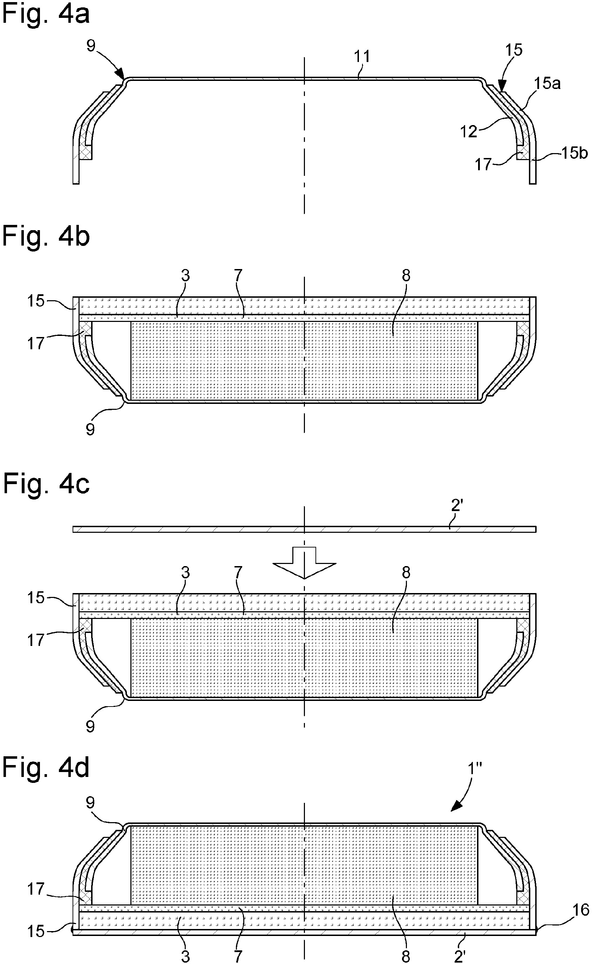

The method for producing a battery in accordance with the invention generally comprises the following steps :
- Producing a sealing assembly as described above. This assembly comprises one receptacle-shaped terminal and a circumferential wall portion. Hence the assembly is itself also receptacle-shaped.
- Placing one or more of the components of the battery in the receptacle formed by the sealing assembly and/or in the receptacle formed by the remainder of the other terminal, if said remainder is receptacle-shaped, said components comprising a cathode, an anode and a separator sheet.
- If a liquid electrolyte is applied, adding said liquid electrolyte to the receptacle formed by the sealing assembly or to the receptacle formed by the remainder of the other terminal, if said remainder is receptacle-shaped. The liquid electrolyte is added to a receptacle comprising electrode material able to absorb the electrolyte. This can be the sealing assembly comprising an anode slurry such as a zinc slurry in the case of a silver oxide battery, or the cup 2 in the embodiment shown in Figure 3c, where the electrolyte is absorbed by the cathode tablet 3, or the sealing assembly comprising the anode, cathode and separator, as in the embodiment shown in Figure 4b. Liquid electrolyte may be added in multiple steps, for example before and after adding the separator sheet 7 to one of the receptacles. Liquid electrolyte is added to only one of the receptacles, as otherwise liquid electrolyte would leak out when the receptacles are assembled.
- Assembling the sealing assembly to the remainder of the other electrode. When a liquid electrolyte is used, this implies that a receptacle comprising the liquid electrolyte (this can be the sealing assembly or the remainder of the other electrode) is positioned with the receptacle facing upwards, after which the other part is placed on top of the receptacle.

In the embodiment of Figures 2 and 3, the anode 8 is inserted into the sealing assembly 9,17,15, while the cathode 3 and the separator sheet 7 are inserted into the cup 2 prior to bringing these parts together to assemble the completed battery.

Figures 4a to 4d illustrate another embodiment of the method of the invention and of a battery according to the invention and produced by said method. The sealing assembly is shown in Figure 4a, and comprises again the negative battery terminal 9 with its contact surface 11 and sidewall 12, the insulating portion 17 and a circumferential wall portion 15. The upstanding wall 12 of the negative terminal 9 is slanted relative to the contact surface 11 of the terminal, and the wall portion 15 comprises a slanted portion 15a that is approximately parallel to the wall 12 of the negative terminal and a straight portion 15b. This sealing assembly 9,17,15 forms a receptacle capable of containing all three of the main battery components, as illustrated in Figure 4b : the anode 8, the separator sheet 7 and the cathode 3. A liquid electrolyte can be added at this point, or between inserting the separator 7 and the cathode 3 with a possible second addition of liquid electrolyte after inserting the cathode 3. Then, as illustrated in Figure 4c, a round metal plate portion 2' having an outer diameter corresponding to the outer diameter of the wall portion 15 of the sealing assembly, is fitted to said wall portion 15 and hermetically connected thereto by a circumferential weld seal 16, leading to the finished battery illustrated in Figure 4d. In this embodiment therefore, the wall portion 15 of the sealing assembly forms the entire sidewall of the positive terminal 2'+15 in the assembled battery. The shape of this battery, characterised by the slanted sidewalls is in accordance with the standard shape used for certain battery types such as CR batteries and silver oxide batteries.

Further variations are within the scope of the present invention. For example, according to embodiments of the invention, the sealing assembly comprises the positive terminal instead of the negative terminal. For example, the sealing assembly could include the cup 2, bonded to an insulating portion and to at least part of the sidewall of the negative terminal.

Likewise, the position of the electrodes 3 and 8 can be reversed compared to the embodiments shown in the drawings. For example in the case of the embodiment of Figures 2a and 2b, the assembly 2+15 then becomes the negative terminal and the lid 9 becomes the positive terminal. The above description is valid mutatis mutandis to that case.

In the embodiment of Figures 2a and 2b, the wall portions 14 and 15 could abut instead of overlapping along the circumference of the battery. Many other configurations are possible within the scope of the invention, and the embodiments shown serve only as examples.

While the invention has been illustrated and described in detail in the drawings and foregoing description, such illustration and description are to be considered illustrative or exemplary and not restrictive. Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A button battery (1',1") comprising a positive receptacle-shaped metal terminal and a negative receptacle-shaped metal terminal, the terminals each comprising a round contact surface (13,11), configured to electrically connect to a respective contact of a device powered by the battery, and a sidewall (14,15;12) extending in the direction opposite the contact surface, the battery further comprising a cathode (3) in electrical contact with the positive terminal, an anode (8) in electrical contact with the negative terminal, a separator (7) arranged between the anode and the cathode and an electrolyte configured to conduct current between the anode and the cathode, **characterised in that** :
- the battery includes a receptacle-shaped sealing assembly comprising :
∘ a first one of said terminals, which can be either the positive terminal o the negative terminal,
∘ a circumferential wall portion (15),
∘ an insulating portion (17) that separates and electrically insulates the first terminal from said wall portion (15),
- said electrically insulating portion (17) is bonded to the first terminal and to said wall portion (15,15') by hermetically sealed bonds,
- said wall portion (15,15') is a part of the second terminal, and is attached to the remainder of said second terminal by an electrically conductive and hermetically closed connection (16).

2. A button battery (1',1") according to claim 1, wherein said first one of the terminals is the negative terminal (9) and wherein said remainder of the positive terminal is a cup-shaped element (2) having an upstanding wall (14) so that the sidewall of the positive terminal is formed by said upstanding wall (14) and by said circumferential wall portion (15) being connected to each other by said electrically conductive connection (16).

3. A button battery (1',1") according to claim 1 or 2, wherein said electrically conductive connection is a circumferential weld seam (16).

4. A button battery (1',1") according to any one of the preceding claims, wherein said electrically insulating portion (17) is a glass portion.

5. A button battery (1',1") according to any one of the preceding claims, wherein said terminals are formed of stainless steel.

6. A button battery (1',1") according to any one of the preceding claims, wherein the electrolyte is a liquid electrolyte.

7. A button battery (1',1") according to any one of the preceding claims, wherein said battery is chosen from the group consisting of : a CR battery, an SR battery, an LR battery, a PR battery.

8. A method for producing a button battery (1',1") according to any one of the preceding claims, comprising the steps of :
- producing said receptacle-shaped sealing assembly by a bonding technique for bonding the material of the insulating portion (17) to the material of the first terminal and of the circumferential wall portion (15),
- placing one or more of the components of the battery in the receptacle formed by the sealing assembly and/or in the receptacle formed by the remainder of the second terminal, if said remainder is receptacle-shaped, said components comprising a cathode (3), an anode (8) and a separator sheet (7),
- if a liquid electrolyte is applied, adding said liquid electrolyte to the receptacle formed by the sealing assembly or to the receptacle formed by the remainder of the second terminal, if said remainder is receptacle-shaped,
- assembling the sealing assembly to the remainder of the second electrode,
- attaching the circumferential wall portion (15) of the sealing assembly to the remainder of the second electrode by said electrically conductive and hermetically closed connection (16).
